# EUROPÄISCHE PATENTANMELDUNG

(11) **EP 2 669 596 A1**
(43) Veröffentlichungstag der Anmeldung: **04.12.2013**
(21) Anmeldenummer: 13170052.8
(22) Anmeldetag: 31.05.2013
(51) Int. Cl.: F24J 2/54, F24J 2/52, H01L 31/042

(54) **Solaranlage**

(30) Priorität: 31.05.2012 CH 7522012
(71) Anmelder: LE - Light Energy Systems AG, 9496 Balzers (LI)
(72) Erfinder: Büchel, Arthur, 9491 Ruggell (LI); Baumgartner, Franz, 78464 Konstanz (DE)
(74) Vertreter: Hasler, Erich

(57) **Zusammenfassung**

Die Erfindung betrifft eine Solaranlage (11) mit einer Mehrzahl von in einer Reihe angeordneten Solarpaneelen (19), wenigstens einem Halteelement (13), an welchem die Solarpaneelen (19) hintereinander gehalten sind und mindestens zwei Endstützen (17), an welchen das mindestens eine Haltelement (13) festgelegt ist. Die Solarpaneelen (19) sind in einer im Wesentlichen vertikalen Grundstellung an dem wenigstens einen Haltelement (13) gehalten.

## Beschreibung

### Gebiet der Erfindung

Die Erfindung betrifft eine Solaranlage gemäss Oberbegriff des Anspruchs 1 und die Verwendung der Solaranlage gemäss Anspruch 9.

### Stand der Technik

Aus dem Stand der Technik, beispielsweise der WO 2010/006460 sind Solaranlagen bekannt, bei denen Solarpaneelen an zwischen zwei Haltestützen gespannten Seilen verschwenkbar befestigt sind. Derartige Solaranlagen haben den Vorteil, dass sie eine grosse Oberfläche besitzen und die Solarpaneelen durch Verschwenken optimal an die Sonneneinstrahlung anpassbar sind. Für landwirtschaftlich genutzte Flächen sind derartige Solaranlagen jedoch ungeeignet, da sie die unter den Solarpaneelen liegende Fläche nahezu vollständig beschatten. Ein Pflanzenwachstum unterhalb der Solaranlagen ist nicht oder nur unbefriedigend möglich.

In der WO 2006/130892 ist eine Solaranlage zur Gewinnung von elektrischer Energie gezeigt. Die photovoltaischen Elemente sind an Seilen gehalten, welche ihrerseits zwischen zwei Masten gespannt sind und vom Boden beabstandet sind. Die PV-Elemente können daher oberhalb eines Parkplatzes, einer Obst- oder Pflanzenplantage angeordnet werden und bieten der darunterliegenden Fläche Schutz und Schatten. Für Pflanzen ist diese Solaranlage aber nicht geeignet, da durch die optimale Stellung der PV-Elemente zu den Sonnenstrahlen die Pflanzen dauerhaft beschattet sind und ein befriedigendes Wachstum nicht möglich ist.

In der US 2011/0005583 ist eine Anordnung für Solarzellen beschrieben, welche die Schadenswahrscheinlichkeit von Windschäden reduziert. Eine Mehrzahl von Solarkollektor Platten hängt von wenigstens einem horizontalen Balkenträger und ist mit diesem gelenkig verbunden. Die einzelnen Balkenträger sind ihrerseits übereinander an einem Mast angeordnet. Bei Wind werden die Solarzellen ausgelenkt und bieten einen geringeren Windwiderstand. Die Konstruktion ist jedoch sehr aufwendig, da der Mast hoch ausgeführt sein muss, um eine ausreichende Anzahl von Kollektorplatten anordnen zu können. Für eine ausreichende Kollektorfläche müssen mehrere Masten vorgesehen sein. Die Ausbeute an elektrischer Energiegewinnung ist gering, da die Kollektorplatten nicht nach der Sonneneinstrahlung ausrichtbar sind.

Auch die US 2010/0077592 zeigt ein System bei dem Solarpaneele an einem horizontalen Support gelenkig aufgehängt sind. Um die Ausbeute an Energiegewinnung zu verbessern, sind an den Rückseiten der Solarpaneelen Gegengewichte angeordnet. Dadurch werden die Frontseiten der Solarpaneele in einen verbesserten Winkel zur Sonneneinstrahlung gebracht und sind trotzdem an dem Support mit dem Gelenk auslenkbar. Das Gegengewicht bewirkt jedoch eine statische Auslenkung in einem bestimmten Winkel. Die Solarpaneele können daher nicht an die sich ändernde Sonneneinstrahlung angepasst werden. Auch ist es mit grossem Aufwand verbunden, jede Solarpaneele mit einem Gegengewicht auszustatten.

### Aufgabe der Erfindung

Aufgabe der vorliegenden Erfindung ist es daher, eine Solaranlage mit an einem Support gelenkig aufgehängten Solarpaneelen vorzuschlagen, bei welcher auf einfache Weise die Energieausbeute der Solarpaneelen verbessert ist.

### Beschreibung

Erfindungsgemäss wird die Aufgabe bei einer Solaranlage gemäss Oberbegriff des Anspruchs 1 dadurch gelöst, dass die Solarpaneelen entweder aus bifacialen Photovoltaikzellen bestehen, die Licht auf der Vorderseite und der Rückseite der Solarpaneelen absorbieren können, oder sowohl auf der Vorderseite, also auch auf der Rückseite mit Photovoltaikzellen konfiguriert sind.. Die vertikale Grundstellung ermöglicht, dass die Solarpaneelen wenig Schatten auf die Fläche unterhalb der Solaranlage werfen. Die Fläche bleibt daher landwirtschaftlich nutzbar, da die Pflanzen ausreichend Sonnenlicht erhalten.

Der Nachteil, dass die Solarpaneelen nicht optimal nach der Sonne ausgerichtet sind, wird vorteilhaft durch die bifaciale Bauweise kompensiert. Es werden die vordere und hintere Oberfläche der Solarpaneele für den photovoltaischen Effekt genutzt. Dies kann dadurch erreicht werden, dass an der Vorder- und an der Rückseite der Paneele photovoltaische Zellen angeordnet sind oder sogenannte bifaciale Solarzellen verwendet werden, welche das Licht sowohl von der Vorderseite als auch von der Rückseite absorbieren und in Strom umwandeln können.

In einer bevorzugten Ausführungsform sind die Solarpaneelen an ihren Seitenkanten, welche zu dem Haltelement orientiert sind, drehbar an dem Haltelement festgelegt. Die Solarpaneele sind drehbar an dem Haltelement festgelegt damit die Windbelastung, welche von den Angriffsflächen der Solarpaneele herrührt, nicht auf die Tragkonstruktion der Solaranlage übertragen wird. Denkbar ist es auch, dass der Drehpunkt von dieser Seitenkante beabstandet ist. Dadurch liegt der von dem Führungsseil geworfenen Schatten nur auf der Fläche der Solarpaneele, welche unterhalb des Drehpunkts liegt. Die Schattenfläche des Führungsseils auf der Solarpaneele ist daher geringer, als wenn der Drehpunkt an der oberen Seitenkante der Solarpaneele vorgesehen ist.

In einer weiteren bevorzugten Ausführungsform wird diese drehbare Aufhängung dazu genutzt, um eine beschränkte Sonnennachführung durchzuführen, in dem die Panelen zueinander mittels eines Seils gekoppelt werden und mit einem Antrieb gemeinsam nachgeführt werden können.

Zweckmässigerweise sind die Solarpaneelen in der Grundstellung mit Dämpferelementen an dem Haltelement vorgespannt. Die vorstehend beschriebene Beweglichkeit der Solarpaneele im Wind wird durch die Dämpferelemente reduziert und die Solarpaneele kehren rascher in ihre Grundstellung zurück. Dadurch sind unkontrollierte Schwenk- oder Schaukelbewegungen der Solarpaneele unterbunden.

Zweckmässigerweise sind die Dämpferelemente Federn oder Elastomere, welche die Drehbewegung der Solarpaneelen relativ zu dem wenigstens einen Halteelement dämpfen. Federn oder Elastomere sind kostengünstige Bauelemente, welche die Aufgabe der Dämpfung dauerhaft und zuverlässig erfüllen.

In einer weiteren Ausführungsform der erfindungsgemässen Solaranlage ist zwischen den Endstützen eine Schutzeinrichtung, insbesondere ein Netz, festgelegt. Die Stützen können als Haltelement für ein Vogel- oder Hagelnetz dienen. Eine unter der Solaranlage liegende landwirtschaftlich genutzte Fläche ist daher vor Vogelfrass und Niederschlägen geschützt. Die Schutzvorrichtung bzw. das Netz kann dauerhaft aufgespannt sein oder an einer Endstütze einrollbar festgelegt sein.

Ein weiterer Aspekt der Erfindung betrifft die Verwendung der erfindungsgemässen Solaranlage auf landwirtschaftlich genutzten Flächen. Wie vorgängig beschrieben, werfen die Solarpaneele, bedingt durch ihre Grundstellung, nur wenig Schatten auf die darunterliegende Fläche, welche demnach ausreichend Sonnenlicht erhält und landwirtschaftlich genutzt werden kann.

Weitere Vorteile und Merkmale ergeben sich aus der nachfolgenden Beschreibung mehrerer Ausführungsbeispiele der Erfindung unter Bezugnahme auf die schematischen Darstellungen. Es zeigen in nicht massstabsgetreuer Darstellung:
- Figur 1:: eine Seitenansicht einer Ausführungsform der erfindungsgemässen Solaranlage;
- Figur 2:: eine Detailansicht zweier nebeneinander angeordneter bifacialer Solarpaneelen;
- Figur 3:: eine Seitenansicht eines Solarpaneels ohne Glasschutz mit bifacialen Photovoltaikzellen,
- Figur 4: eine Seitenansicht eines Solarpaneels mit Photovoltaikzellen an der Vorder- und an der Rückseite und
- Figur 5:: eine Seitenansicht eines weiteren Ausführungsbeispiels der erfindungsgemässen Solaranlage.

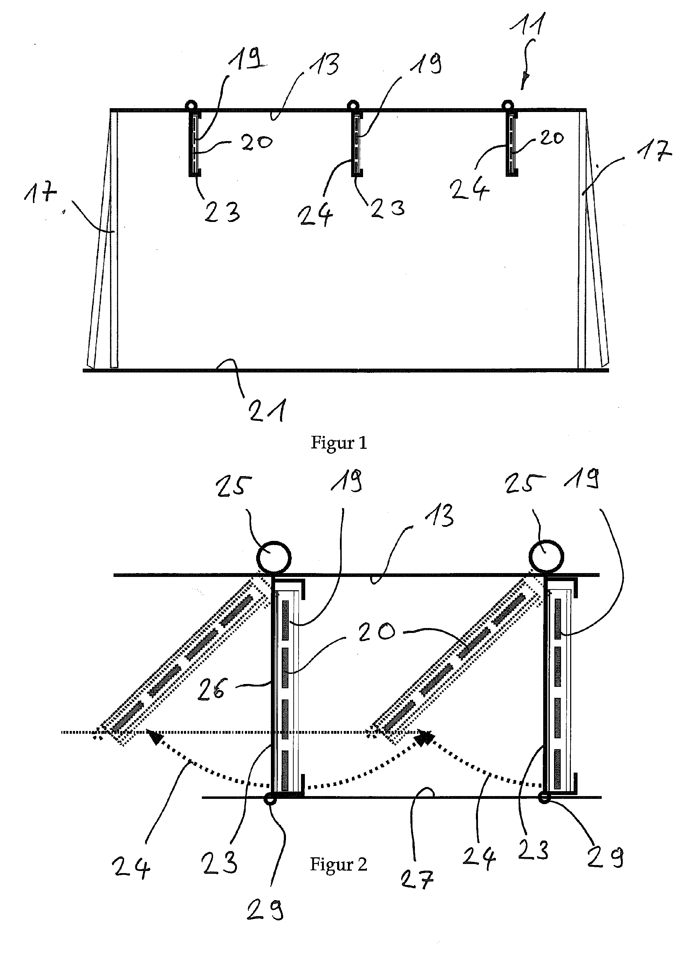

Die Figur 1 zeigt eine Ausführungsform der erfindungsgemässen Solaranlage, welche gesamthaft mit dem Bezugszeichen 11 bezeichnet wird. Als Halteelemente sind in dieser Ausführungsform zwei im Wesentlichen parallel geführte Führungsseile oder Führungsstangen 13 vorgesehen. Die Führungsseile oder -stangen 13 sind zwischen zwei Stützen 17 gespannt bzw. geführt.

An den Führungsseilen bzw. Führungsstangen 13 ist eine Mehrzahl von hintereinander angeordneten bifacialen Solarpaneelen 19 gehalten. Wenn im Rahmen dieser Anmeldung von einer bifacialen Solarpaneele 19 gesprochen wird, so sei damit vorzugsweise eine Platte mit zwei im Wesentlichen parallelen Flachseiten offenbart, wobei an der Platte Photovoltaikzellen 20 angeordnet sind, welche Sonnenlicht auf beiden Zellenoberflächen aufnehmen. Auch ist es denkbar, dass auf beiden Flachseiten der Platte herkömmliche Photovoltaikzellen 22 angeordnet sind. Vorzugsweise werden also beide Flachseiten eines Solarpaneels zur photovoltaischen Umsetzung des Sonnenlichts genutzt. An der einen Seite des Solarpaneels 19 kann zum Schutz der Photovoltaikzellen 20,22 eine Glasscheibe 26 angeordnet sein.

Die bifacialen Solarpanellen 19 hängen im Wesentlichen vertikal an den Führungseilen oder -stangen 13 herab. Diese vertikale Ausrichtung hat zwar den Nachteil, dass die Photovoltaikzellen nicht optimal an den jeweiligen Sonnenstand anpassbar sind. Die Beschattung der sich unter der Solaranlage 11 befindenden landwirtschaftlich genutzten Fläche 21ist jedoch gering. Durch die bifaciale Bauweise der Solarpaneelen 19 kann die fehlende Ausrichtung der Solarpaneelen 19 kompensiert werden. Die erfindungsgemässe Solaranlage 11 ist daher geeignet auch landwirtschaftlich genutzte Flächen zusätzlich für Solaranlagen zu nutzen.

Die bifacialen Solarpaneelen 19 sind in Rahmen 23 aufgenommen. Der Rahmen ist drehbar in Pfeilrichtung 24, beispielsweise mit einem Gelenk, an den Führungsseilen oder -stangen 13 befestigt und dient als Bindeglied der Solarpaneele 19 zu den Führungsseilen oder -stangen 13. Damit die Solarpaneele 19 nicht unkontrolliert durch Wind ins Schaukeln versetzt wird, ist sie in einer Grundstellung von einem Dämpfungselement 25 gehalten. Bevorzugt ist die Grundstellung von vertikaler Ausrichtung, da die Solarpaneele 19, bedingt durch ihr Gewicht, selbständig nach Auslenkung in die vertikale Stellung zurückkehrt. Das Dämpfungselement kann eine Feder oder ein Elastomer sein. Wird die Solarpaneele 19 aus der Grundstellung ausgelenkt, so wird das Dämpfungselement unter Zug- oder Druckspannung versetzt und dreht die Solarpaneele 19 zurück in die Grundstellung.

Zusätzlich oder ersatzweise kann die Solarpaneele 19 durch Seile 27 in der Grundstellung gehalten sein. Die Seile 27 sind an der Seitenkante des Rahmens 23 durch Ösen 29 geführt. Damit die Tragekonstruktion nicht überbeansprucht wird, ist eine geringe Auslenkbewegung der Solarpaneele 19 vorzusehen. Diese ist aber abzudämpfen, damit die Auslenkbewegung kontrollierbar bleibt. Die Seile 27 können auch dazu verwendet werden, die Solarpaneele 19 gemeinsam in eine ausgelenkte Position überzuführen, um die Ausrichtung an den Sonnenstand anzupassen (strichlierte Solarpaneele 19 in Figur 2).

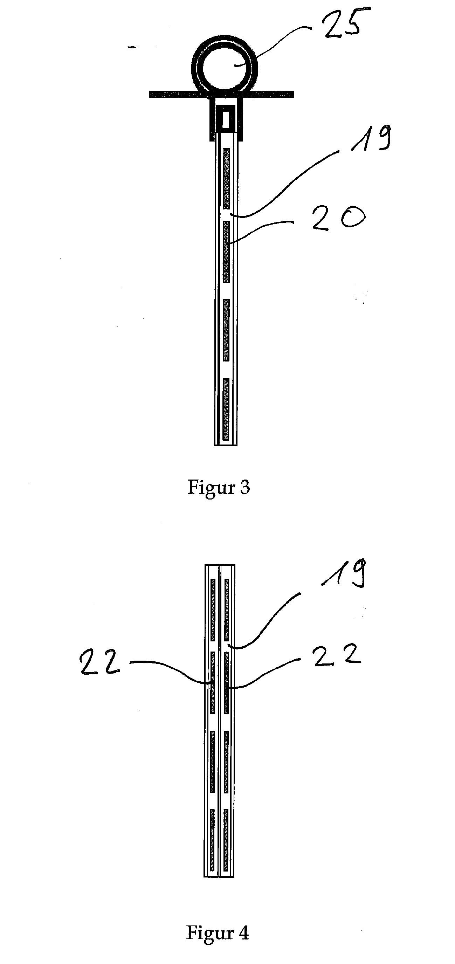

In den Figuren 3 und 4 sind Solarpaneele 19 ohne Glasscheibe 26 gezeigt. Da die Solarpaneele 19 vorzugsweise eine vertikale Ausrichtung besitzen, sind sie horizontal wirkenden Niederschlägen wie Hagelschlag, Starkregen oder Schneefall nur beschränkt ausgesetzt. Deshalb ist das Vorsehen einer schützenden Glasscheibe nicht unbedingt notwendig. Solche Solarpaneele 19 sind im Vergleich zu Solarpaneelen mit Glasscheiben um wenigstens 50% leichter. Dies hat den Vorteil, dass die Halterung der Solarpaneele 10 geringer dimensioniert sein kann. Da die Solarpaneele 19 der Solaranlage 11 aufgehängt sind, sind Solarpaneele ohne Glasscheiben auch aus sicherheitstechnischer Sicht von grossem Vorteil, da kein Überkopf-Glas vorhanden ist und keine entsprechenden Sicherheitsmassnahmen notwendig sind. In der Figur 3 ist eine glasfreie Solarpaneele 19 gezeigt, bei welcher bifaciale Photovoltaikzellen 20 zur Anwendung kommen. In der Figur 22 sind einseitig nutzbare Photovoltaikzellen 22 an beiden Seiten der Solarpaneele 19 angeordnet, um beide Seiten des Solarpaneels 19 zur Umwandlung von Licht in Strom nutzen zu können.

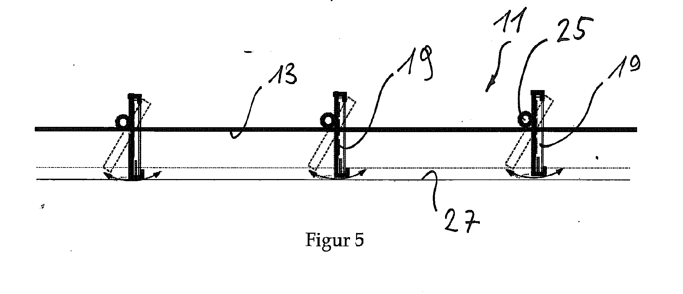

In Figur 5 ist im Gegensatz zu den Figuren 1 und 2 das Gelenk bzw. der Drehpunkt des Solarpaneels 19 nicht an dessen oberen Seitenkante angeordnet, sondern ist in eine Position versetzt, welche von der oberen Seitenkante beabstandet ist. Diese Anordnung der Solarpaneele 19 relativ zu dem Führungsseil 13 reduziert den Schattenwurf des Führungsseils 13 auf das Solarpaneel 19.

### Legende:

| | |
|---|---|
| 11 | Solaranlage |
| 13 | Führungsseile, Führungsstangen |
| 17 | Stützen |
| 19 | Bifaciale Solarpaneele |
| 20 | Bifaciale Photovoltaikzellen |
| 21 | Landwirtschaftlich genutzte Fläche |
| 22 | Einseitig nutzbare Photovoltaikzellen |
| 23 | Rahmen |
| 24 | Pfeilrichtung |
| 25 | Dämpfungselement |
| 26 | Glasscheibe |
| 27 | Seil |
| 29 | Ösen |

## Patentansprüche

1. Solaranlage (11) mit
- einer Mehrzahl von in einer Reihe angeordneten Solarpaneelen (19),
- wenigstens einem Halteelement (13), an welchem die Solarpaneelen (19) hintereinander gehalten sind und
- mindestens zwei Endstützen (17), an welchen das mindestens eine Haltelement (13) festgelegt ist,
welche Solarpaneelen (19) in einer im Wesentlichen vertikalen Grundstellung an dem wenigstens einen Haltelement (13) gehalten sind,
**dadurch gekennzeichnet, dass** die Solarpaneelen (19) entweder aus bifacialen Photovoltaikzellen bestehen, die Licht auf der Vorderseite und der Rückseite der Solarpaneelen (19) absorbieren können, oder sowohl auf der Vorderseite, also auch auf der Rückseite mit Photovoltaikzellen konfiguriert sind.

2. Solaranlage nach einem der Anspruch 1, **dadurch gekennzeichnet, dass** die Solarpaneelen (19) an ihren Seitenkanten, welche zu dem Haltelement orientiert sind, drehbar an dem Haltelement (13) festgelegt sind.

3. Solaranlage nach einem der Ansprüche 1 bis 2, **dadurch gekennzeichnet, dass** die Solarpaneelen (19) in der Grundstellung mit Dämpfungselementen (25) an dem Haltelement (13) vorgespannt sind.

4. Solaranlage nach Anspruch 3, **dadurch gekennzeichnet, dass** die Dämpfungselemente (25) Federn oder Elastomere sind, welche die Drehbewegung der Solarpaneelen (19) relativ zu dem wenigstens einen Halteelement (13) dämpfen.

5. Solaranlage nach einem der Ansprüche 1 bis 4, **dadurch gekennzeichnet, dass** Solaranlage (11) mit einer zusätzlichen Einrichtung ausgerüstet ist, die die Solarpaneelen (19) mittels Seilen (27) aneinander koppelt und eine Nachführung der Solarpaneelen (19) mittels einer Antriebseinrichtung erlaubt.

6. Solaranlage nach einem der Ansprüche 1 bis 5, **dadurch gekennzeichnet, dass** die Solarpaneele (19) frei von einer Glasscheibe (26) sind.

7. Solaranlage nach einem der Ansprüche 1 bis 6, **dadurch gekennzeichnet, dass** zwischen den Endstützen (17) eine Schutzeinrichtung, insbesondere ein Netz, festgelegt ist.

8. Verwendung der Solaranlage (11) gemäss einem der vorigen Ansprüche auf landwirtschaftlich genutzten Flächen.
